# EUROPÄISCHE PATENTSCHRIFT

(11) **EP 1 380 718 B1**
(45) Veröffentlichungstag und Bekanntmachung des Hinweises auf die Patenterteilung: **06.04.2005**
(21) Anmeldenummer: 03014620.3
(22) Anmeldetag: 26.06.2003
(51) Int. Cl.: E05F 15/14, B60J 5/06

(54) **Vorrichtung zur automatischen Betätigung einer Kraftfahrzeugschiebetür**
Device for automatically actuating a sliding door of a vehicle
Dispositif pour l'actionnement automatique d'une porte coulissante de véhicule

(30) Priorität: 08.07.2002 GB 0215691; 02.12.2002 DE 10256181
(43) Veröffentlichungstag der Anmeldung: 14.01.2004
(73) Patentinhaber: Delphi Technologies, Inc., Troy Michigan 48007 (US)
(72) Erfinder: Büscher, Hans-Joachim, 40476 Düsseldorf (DE)
(74) Vertreter: Manitz, Finsterwald & Partner GbR

(56) Entgegenhaltungen:
- US-A- 4 887 390
- US-A- 5 536 061
- US-B1- 6 321 488

## Beschreibung

Die Erfindung betrifft eine Vorrichtung zur automatischen Betätigung einer Schiebetür eines Kraftfahrzeugs, die in wenigstens zwei schienenartigen Führungen an einem Chassis des Kraftfahrzeugs geführt ist.

Derartige Vorrichtungen sind grundsätzlich bekannt. Sie sind beispielsweise in Omnibussen, Kleinbussen oder Minivans vorgesehen, um das Öffnen und Verschließen von Schiebetüren zu erleichtern. Problematisch ist bei bekannten Vorrichtungen die Anordnung einer Antriebseinheit für die Schiebetür in dem Kraftfahrzeug: Einerseits ist es aufgrund eines beschränkten Platzangebots schwierig, die Antriebseinheit zusätzlich zu anderen Fahrzeugkomponenten, wie beispielsweise Klimaanlage oder Stauräumen, an der Karosserie des Kraftfahrzeugs unterzubringen. Andererseits erfordert der Einbau von bekannten Vorrichtungen längere Montagezeiten, die zum überwiegenden Teil auf den Aus- und Einbau von Fahrzeugsitzen, Sicherheitsgurten und Teilen der Innenverkleidung zurückzuführen sind.

Die US-A-5,536,061 beschreibt eine Vorrichtung zur automatischen Betätigung einer Kraftfahrzeugschiebetür, bei der ein Antriebsmotor im Bereich einer unteren vorderen Ecke der Schiebetür angeordnet ist. Der Antriebsmotor treibt ein Antriebsrad an, welches unter Beaufschlagung mit einer Federkraft mit einer unteren Schiebetürführung zusammenwirkt, um die Schiebetür entlang der Führung zu bewegen.

Die US-B-6,321,488 lehrt ebenfalls eine Vorrichtung zur automatischen Betätigung einer Kraftfahrzeugschiebetür, bei der ein Antriebsmotor in einem vorderen unteren Eckbereich der Schiebetür angeordnet ist. Der Antriebsmotor treibt ein Zahnrad an, welches mit einer im Bereich einer unteren Schiebetürführung angeordneten Zahnstange zusammenwirkt, um die Schiebetür bei Aktivierung des Antriebsmotors entlang der Führung zu bewegen.

Aus der US-A-4,887,390 ist eine Vorrichtung gemäß dem Oberbegriff des neuen Anspruchs 1 bekannt. Bei dieser Vorrichtung ist das eine Ende des Gegenelements im Bereich des hinteren Endes einer Führung und das andere Ende des Gegenelements im Bereich des vorderen Endes derselben Führung befestigt.

Der Erfindung liegt die Aufgabe zugrunde, eine Vorrichtung der eingangs genannten Art zu schaffen, die den im Fahrzeug vorhandenen Platz besser ausnutzt und sich mit einem geringeren zeitlichen Aufwand montieren lässt.

Die Aufgabe wird durch eine Vorrichtung mit den Merkmalen des Anspruchs 1 und insbesondere dadurch gelöst, dass in der Schiebetür ein Antriebsaggregat vorgesehen ist, um die Schiebetür relativ zum Chassis entlang der Führungen zu bewegen. Das Antriebsaggregat wirkt zum Bewegen der Schiebetür mit einem am Chassis fest verankerten, zumindest bereichsweise flexibel ausgebildeten Gegenelement zusammen, wobei ein erstes Ende des Gegenelements im Bereich eines - in Fahrtrichtung gesehen - vorderen Endes einer ersten Führung und ein zweites Ende des Gegenelements im Bereich eines hinteren Endes einer zweiten Führung befestigt ist.

Das Antriebsaggregat wird erfindungsgemäß also nicht am Fahrzeugchassis sondern in der Schiebetür selbst untergebracht. Der Türinnenraum wird auf diese Weise vorteilhaft ausgenutzt. Gleichzeitig kann das Antriebsaggregat unabhängig von anderen Fahrzeugkomponenten, wie beispielsweise einer Klimaanlage, in einer antriebstechnisch optimalen Weise angeordnet werden. Darüber hinaus ist es nicht erforderlich, an der Fahrzeugkarosserie zusätzlichen Einbauplatz für das Antriebsaggregat bereitzustellen.

Außerdem ist die Montage der erfindungsgemäßen Vorrichtung vereinfacht und mit einem reduzierten zeitlichen Montageaufwand durchführbar. Indem das Antriebsaggregat in der Schiebetür untergebracht wird, ist es nicht erforderlich, Fahrzeugsitze, Sicherheitsgurte und Innenverkleidungen für den Einbau des Antriebsaggregats an der Fahrzeugkarosserie aus- und anschließend wieder einzubauen. Stattdessen kann der Einbau des Antriebsaggregats in die Schiebetür parallel zur Montage der Innenausstattung des Kraftfahrzeugs erfolgen, so dass sich die Gesamtmontagezeit des Kraftfahrzeugs durch den Einbau der erfindungsgemäßen Vorrichtung nur um die Zeit erhöht, die für die reine Montage des Schiebetürantriebs erforderlich ist.

Da das Gegenelement fest am Chassis verankert ist und nicht für eine Antriebsbewegung relativ zum Chassis vorgesehen ist, tritt im Wesentlichen keine Reibung zwischen Gegenelement und Chassis auf, so dass die Schiebetür mit einem minimalen Kraftaufwand bewegbar ist.

Dadurch, dass ein erstes Ende des Gegenelements im Bereich eines - in Fahrtrichtung gesehen - vorderen Endes einer ersten Führung und ein zweites Ende des Gegenelements im Bereich eines hinteren Endes einer zweiten Führung befestigt ist, ist gewährleistet, dass die Schiebetür sowohl eine Position, in der eine Türöffnung vollständig verschlossen ist, als auch eine Position einnehmen kann, in der die Türöffnung vollständig geöffnet ist.

Vorteilhafte Ausführungsformen der Erfindung sind den Unteransprüchen, der Beschreibung und der Zeichnung zu entnehmen.

Gemäß einer ersten Ausführungsform weist das Gegenelement ein Seil, einen Riemen oder eine Kette auf, dessen bzw. deren Enden fest mit dem Fahrzeugchassis verbunden sind. Ein derart flexibles Gegenelement kann der Verschiebebewegung der Tür besonders gut folgen und stellt in jeder Position der Schiebetür eine optimale Kraftübertragung zwischen Antriebsaggregat und Gegenelement sicher.

Das Antriebsaggregat kann ein Umlenkelement für das Gegenelement bilden, wobei im Bereich des Antriebsaggregats insbesondere ein erster Gegenelementabschnitt sich zumindest annähernd horizontal in Richtung der ersten Führung erstreckt und ein zweiter Gegenelementabschnitt sich schräg dazu in Richtung der zweiten Führung erstreckt. Das als Umlenkelement wirkende Antriebsaggregat trägt dem Umstand Rechnung, dass die Führungen typischerweise in unterschiedlichen Höhen am Chassis des Kraftfahrzeugs angeordnet sind.

Gemäß einer weiteren Ausführungsform der Erfindung sind eine vordere und eine hintere Umlenkeinrichtung, insbesondere Umlenkrolle, zum Umlenken des Gegenelements an der Schiebetür im Bereich von in die Führungen eingreifenden Lagermitteln der Schiebetür vorgesehen. Durch diese Umlenkeinrichtungen wird das Gegenelement in die Schiebetür hineingeführt, damit es dort für eine Bewegung der Schiebetür mit dem Antriebsaggregat zusammenwirken kann.

Weiterer Gegenstand der Erfindung ist außerdem ein Verfahren zum automatischen Betätigen einer in wenigstens zwei schienenartigen Führungen an einem Chassis eines Kraftfahrzeugs geführten Schiebetür, bei dem die Schiebetür durch ein in der Schiebetür vorgesehenes Antriebsaggregat relativ zum Chassis entlang der Führungen bewegt wird.

Das Antriebsaggregat kann sich zum Bewegen der Schiebetür an einem fest einem Chassis verankerten und insbesondere flexiblen Gegenelement entlang voranbewegen. Da das Gegenelement an dem Chassis fest verankert ist, d.h. sich nicht wesentlich relativ zum Chassis bewegen kann, und die Schiebetür durch eine Relativbewegung des Antriebsaggregats bezüglich des Gegenelements und somit des Chassis bewegt wird, ist eine Reibung zwischen Gegenelement und Chassis im Wesentlichen ausgeschlossen, so dass die Schiebetür mit minimalem Kraftaufwand bewegt wird.

Nachfolgend wird die Erfindung rein beispielhaft anhand einer bevorzugten Ausführungsform und unter Bezugnahme auf die beigefügte Zeichnung beschrieben. Es zeigen:
- Fig. 1: eine schematische Seitenansicht einer in zwei Führungen geführten Kraftfahrzeugschiebetür im geschlossenen Zustand; und
- Fig. 2A - 2D: schematische Draufsichten auf die Schiebetür von Fig. 1 in verschiedenen Schließzuständen, die von (A) ganz geschlossen bis (D) ganz offen reichen.

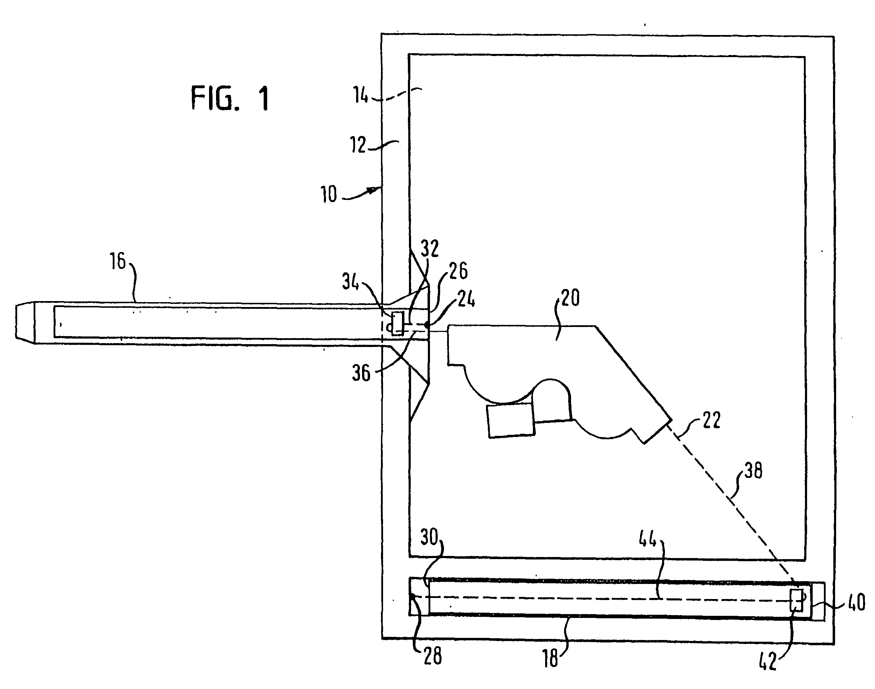

Fig. 1 zeigt die Schiebetür 10 eines Kraftfahrzeugs in einem Zustand, in dem sie eine durch einen Türrahmen 12 begrenzte Türöffnung 14 vollständig verschließt. Im dargestellten Ausführungsbeispiel handelt es sich um eine rechte Tür des Fahrzeugs, auf die man von außerhalb des Fahrzeugs blickt. Ein vorderes Ende des Fahrzeugs würde sich in der Zeichnung rechts und ein hinteres Ende links befinden. Zum Öffnen der Türöffnung 14 muss die Schiebetür 10 nach hinten (in der Zeichnung nach links) bewegt werden.

Die Schiebetür 10 ist in zwei, im Wesentlichen horizontalen schienenartigen Führungen 16, 18 verschiebbar an dem Chassis des Kraftfahrzeugs gelagert. Eine erste, obere Führung 16 ist in einem Bereich mittlerer Höhe des Fahrzeugs und - bezüglich der Fahrzeugorientierung - parallel versetzt hinter einer zweiten, unteren Führung 18 angeordnet. Die vordere zweite Führung 18 ist unterhalb der durch die Schiebetür 10 zu verschließenden Türöffnung 14 angeordnet.

In der Schiebetür 10 ist ein Antriebsaggregat 20 untergebracht, um die Schiebetür 10 relativ zum Chassis entlang der Führungen 16, 18 zu bewegen. Das Antriebsaggregat 20 kann beispielsweise einen Elektromotor zum Antreiben von einem oder mehreren, nicht gezeigten Antriebszahnrädem aufweisen, die mit einem entsprechend ausgebildeten Gegenelement 22 in Eingriff stehen.

Das Gegenelement 22 ist zumindest bereichsweise flexibel ausgebildet und beim dargestellten Ausführungsbeispiel durch einen Zahnriemen gebildet, dessen Enden fest an dem Fahrzeugchassis verankert sind. Dabei ist ein erstes, oberes Ende 24 des Gegenelements 22 im Bereich eines - in Fahrtrichtung gesehen - vorderen Endes 26 der hinteren oberen Führung 16 und ein zweites, unteres Ende 28 des Gegenelements 22 im Bereich eines hinteren Endes 30 der vorderen Führung 18 befestigt.

Zwischen seinen an dem Chassis fest verankerten Enden 24, 28 wird das Gegenelement 22 mehrmals umgelenkt. Ausgehend von seinem oberen Ende 24 erstreckt sich ein erster, oberer Endabschnitt 32 des Gegenelements 22 zunächst - in Fahrtrichtung gesehen - nach hinten. Durch eine an der Schiebetür 10 drehbar gelagerte erste Umlenkrolle 34 wird das Gegenelement 22 um 180° umgelenkt, so dass ein erster Gegenelementabschnitt 36 ausgebildet ist, der sich von der ersten Umlenkrolle 34 zum Antriebsaggregat 20 erstreckt. Das Antriebsaggregat 20 ist in einer derartigen Höhe an der Schiebetür 10 angebracht, dass der erste Gegenelementabschnitt 36 parallel zur ersten Führung 16 und somit im Wesentlichen horizontal verläuft.

Das Antriebsaggregat 20 lenkt das Gegenelement 22 seinerseits derart um, dass sich ein zweiter Gegenelementabschnitt 38 nach vorne und schräg unten in Richtung eines vorderen Endes 40 der unteren Führung 18 erstreckt. Der Winkel, den der zweite Gegenelementabschnitt 38 mit dem ersten Gegenelementabschnitt 36 einschließt, beträgt im dargestellten Ausführungsbeispiel ungefähr 130°. Da der Winkel von der Breite der Schiebetür 10 und von dem Vertikalabstand der Führungen 16, 18 zueinander abhängt, kann er auch von 130° verschiedene Werte zwischen 90° und 180° einnehmen.

In einem vorderen unteren Eckbereich der Schiebetür 10 ist eine zweite Umlenkrolle 42 an der Schiebetür vorgesehen. Diese zweite Umlenkrolle 42 lenkt den schräg verlaufenden zweiten Gegenelementabschnitt 38 in einen parallel zur unteren Führung 18 und somit im Wesentlichen horizontal verlaufenden zweiten, unteren Endabschnitt 44 des Gegenelements 22 um. Wie voranstehend bereits erwähnt wurde, ist das untere Ende 28 des Gegenelements 22, d.h. der untere Endabschnitt 44 des Gegenelements 22, im Bereich des hinteren Endes.30 der unteren Führung 18 fest am Chassis verankert.

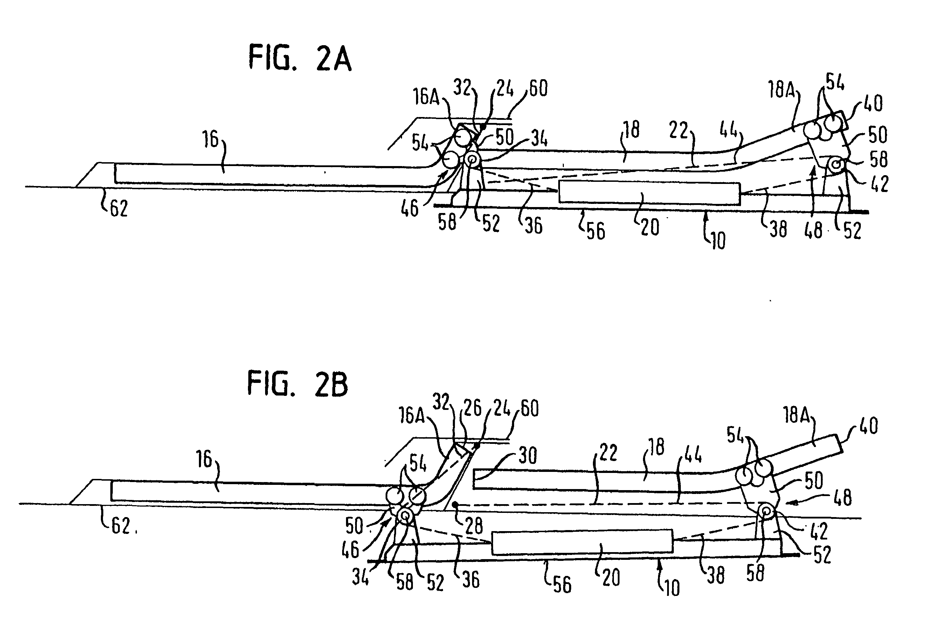

Wie den Fig. 2A bis 2D zu entnehmen ist, ist die Schiebetür 10 mit Hilfe von Lagermitteln 46, 48 verschiebbar in den Führungen 16, 18 gehalten. Ein hinteres, oberes Lagermittel 46 greift in die obere Führung 16 ein, und ein vorderes, unteres Lagermittel 48 greift in die untere Führung 18 ein. Die Lagermittel 46, 48 weisen jeweils ein Schwenkteil 50 auf, das gelenkig mit einem Ansatz 52 der Schiebetür 10 verbunden ist. An der dem Ansatz 52 entgegengesetzten Seite jedes Schwenkteils 50 sind jeweils zwei Rollen 54 vorgesehen, die entsprechend in der oberen Führung 16 und unteren Führung 18 geführt sind.

Damit eine Außenfläche 56 der Schiebetür 10 im geschlossenen Zustand der Schiebetür bündig mit der die Türöffnung 14 umgebenden Karosserie des Kraftfahrzeugs abschließt, weisen die Führungen 16, 18 jeweils einen vorderen Endabschnitt 16A, 18A auf, der in Richtung des Fahrzeuginneren abgewinkelt ist.

Im geschlossenen Zustand befindet sich die Schiebetür 10 in ihrer - in Fahrtrichtung gesehen - vordersten Position (Fig. 2A). In dieser Position befinden sich die Lagermittel 46, 48 jeweils in den Endbereichen der Vorderabschnitte 16A, 18A der Führungen 16, 18.

Die Umlenkrollen 34, 42 für das Gegenelement 22 sind im Bereich der gelenkigen Verbindung zwischen Schwenkteil 50 und Ansatz 52 der Lagermittel 46, 48 angeordnet. Vorzugsweise dient eine Gelenkachse 58 des aus Schwenkteil 50 und Ansatz 52 gebildeten Gelenks gleichzeitig als Lagerachse für die Umlenkrollen 34, 42.

Wie in den Fig. 2A bis 2D gezeigt ist, wird das Gegenelement 22 durch die Umlenkrollen 34, 42 nicht nur innerhalb einer vertikalen, zur Schiebetür 10 im Wesentlichen parallelen Ebene umgelenkt, sondern auch in einer dazu senkrechten, d.h. horizontalen Ebene. Da die Umlenkrollen 34, 42 einen größeren Abstand zu der Außenfläche 56 der Schiebetür 10 als das Antriebsaggregat 20 aufweisen, verlaufen die Gegenelementabschnitte 36, 38 zwischen dem Antriebsaggregat 20 und den Umlenkrollen 34, 42 nicht parallel zur Schiebetür 10 sondern schräg dazu in Richtung des Fahrzeuginneren. Das obere Ende 24 des Gegenelements 22 ist im Bereich des vorderen Endes 26 der oberen Führung 16 an einer C-Säule 60 der Fahrzeugkarosserie 62 verankert. Das untere Ende 28 des Gegenelements 22 ist im Bereich des hinteren Endes 30 der unteren Führung 18 an dem Chassis des Fahrzeugs befestigt.

Nachfolgend wird die automatische Betätigung der Schiebetür 10 anhand von Fig. 2A bis 2D näher erläutert. Als Ausgangspunkt dient dabei der in Fig. 2A gezeigte geschlossene Zustand der Schiebetür 10, welcher der Situation von Fig. 1 entspricht.

Wenn das Antriebsaggregat 20 zum Öffnen der Schiebetür 10 aktiviert wird, so wirkt das Antriebsaggregat 20 derart mit dem Gegenelement 22 zusammen, dass sich das Antriebsaggregat 20 an dem Gegenelement 22 entlang zieht. Da das Gegenelement 22 fest am Fahrzeugchassis verankert ist und es sich deshalb in Bewegungsrichtung der Schiebetür 10 relativ zum Fahrzeugchassis nicht wesentlich bewegen kann, bewegt sich das Antriebsaggregat 20 bei seiner Aktivierung relativ zum Gegenelement 22 und somit relativ zum Fahrzeugchassis. Wegen der Befestigung des Antriebsaggregats 20 in der Schiebetür 10 wird bei der Aktivierung des Antriebsaggregats 20-folglich auch die Schiebetür 10 relativ zum Fahrzeugchassis bewegt.

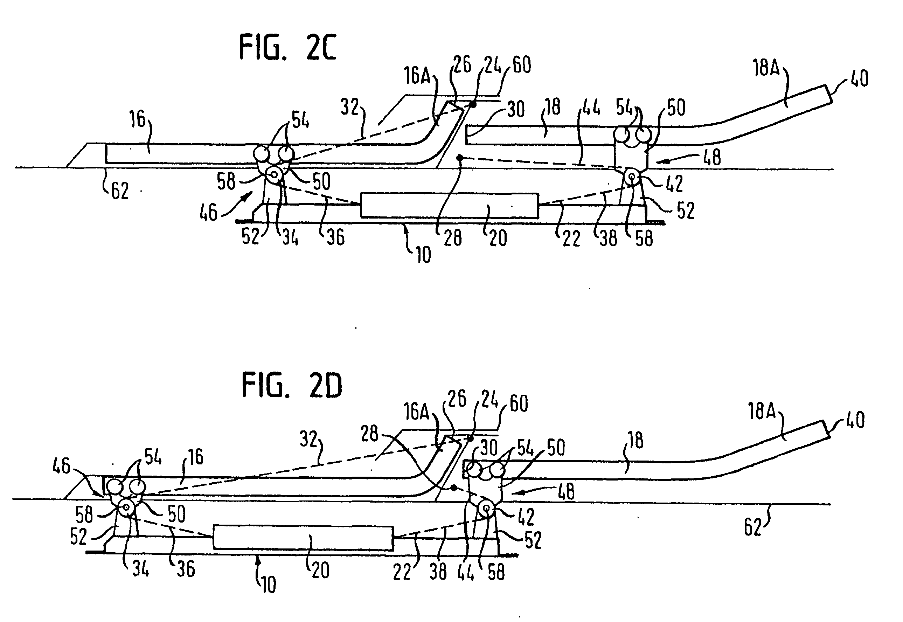

Während des in Fig. 2A bis 2D gezeigten Vorgangs des Öffnens der Schiebetür 10 wird die Schiebetür 10 - in Fahrtrichtung gesehen - nach hinten (in den Figuren nach links) bewegt. Dabei bewegen sich die Lagermittel 46, 48 der Schiebetür 10 in Richtung der hinteren Enden der Führungen 16, 18, bis sie im vollständig geöffneten Zustand der Schiebetür 10, der in Fig. 2D gezeigt ist, jeweils am hinteren Ende der Führungen 16, 18 angelangt sind. Während des Öffnungsvorgangs vergrößert sich der Abstand zwischen der oberen Umlenkrolle 34 und dem Verankerungspunkt des oberen Endes 24 des Gegenelements 22. Da die Gesamtlänge des Gegenelements 22 fest vorgegeben ist, nimmt im Gegenzug der Abstand zwischen der unteren Umlenkrolle 42 und dem Verankerungspunkt des unteren Endes 28 des Gegenelements 22 ab. Während die Länge des unteren Endabschnitts 44 also immer kürzer wird, wird der obere Endabschnitt 32 immer länger.

Wie aus den Fig. 2C und 2D in Zusammenschau mit Fig. 1 zu entnehmen ist, verläuft der erste Endabschnitt 32 des Gegenelements 22 innerhalb der oberen Führung 16. Aufgrund des stark abgewinkelten Vorderabschnitts 16A der Führung 16 gerät der Endabschnitt 32 des Gegenelements 22 im Krümmungsbereich der Führung 16 mit einer Innenwand der Führung 16 in Kontakt, wenn die Schiebetür 10 einen ungefähr halboffenen Zustand erreicht hat (Fig. 2C). Da das Gegenelement 22 aber fest am Chassis verankert ist, kann es sich nicht in Bewegungsrichtung der Schiebetür 10 relativ zum Chassis bewegen und somit nicht an der Innenwand der Führung 16 entlang schleifen. Es werden folglich keine unerwünschten Reibungskräfte erzeugt. Die Berührung von Gegenelement 22 und Führung 16 im Bereich der Krümmung der Führung 16 ist daher unkritisch.

Der Schließvorgang der Schiebetür 10 erfolgt entsprechend in umgekehrter Richtung, wobei sich der untere Endabschnitt 44 des Gegenelements 22 bei einer Bewegung der Schiebetür 10 - in Fahrtrichtung gesehen - nach vorne (nach rechts in der Zeichnung) verlängert und sich der obere Endabschnitt 32 entsprechend verkürzt.

Bei dem dargestellten Ausführungsbeispiel ist die erste Führung 16 im Bereich einer mittleren Höhe des Fahrzeugs und - bezüglich der Fahrzeugorientierung - hinter der Türöffnung 14 und die zweite Führung 18 unterhalb der Türöffnung 14 angeordnet, so dass die Schiebetür 10 zum Öffnen der Türöffnung 14 nach hinten geschoben wird.

Die erste Führung kann aber auch vor der Türöffnung 14 angeordnet sein, so dass das Öffnen der Tür durch eine Bewegung der Schiebetür nach vorne, d.h. also in Fahrtrichtung zu erfolgen hätte. Ebenso wäre es möglich, die zweite Führung nicht unterhalb der Türöffnung 14 sondern oberhalb davon anzuordnen. Die erste Führung muss darüber hinaus nicht in einem Bereich einer mittleren Höhe des Fahrzeugs angeordnet sein. Sie könnte gleichermaßen im Bereich der Höhe einer oberen oder unteren Begrenzung der Türöffnung vorgesehen sein.

Denkbar wäre außerdem eine Anordnung mit insgesamt drei Führungen, nämlich einer Führung vor oder hinter der Türöffnung und jeweils einer Führung oberhalb und unterhalb der Türöffnung.

### Bezugszeichenliste

- 10: Schiebetür
- 12: Türrahmen
- 14: Türöffnung
- 16: Führung
- 16A: Vorderabschnitt
- 18: Führung
- 18A: Vorderabschnitt
- 20: Antriebsaggregat
- 22: Gegenelement
- 24: Gegenelementende
- 26: Führungsende
- 28: Gegenelementende
- 30: Führungsende
- 32: Endabschnitt
- 34: Umlenkrolle
- 36: Gegenelementabschnitt
- 38: Gegenelementabschnitt
- 40: Führungsende
- 42: Umlenkrolle
- 44: Endabschnitt
- 46: Lagermittel
- 48: Lagermittel
- 50: Schwenkteil
- 52: Ansatz
- 54: Rollen
- 56: Außenfläche
- 58: Gelenkachse
- 60: C-Säule
- 62: Karosserie

## Patentansprüche

1. Vorrichtung zur automatischen Betätigung einer Schiebetür (10) eines Kraftfahrzeugs, die in wenigstens zwei schienenartigen Führungen (16, 18) an einem Chassis des Kraftfahrzeugs geführt ist,
wobei in der Schiebetür (10) ein Antriebsaggregat (20) vorgesehen ist, um die Schiebetür (10) relativ zum Chassis entlang der Führungen (16, 18) zu bewegen, und wobei das Antriebsaggregat (20) zum Bewegen der Schiebetür (10) mit einem am Chassis fest verankerten, zumindest bereichsweise flexibel ausgebildeten Gegenelement (22) zusammenwirkt,
**dadurch gekennzeichnet,**
**dass** ein erstes Ende (24) des Gegenelements (22) im Bereich eines - in Fahrtrichtung gesehen - vorderen Endes (26) der ersten Führung (16) und ein zweites Ende (28) des Gegenelements (22) im Bereich eines hinteren Endes (30) der zweiten Führung (18) befestigt ist.

2. Vorrichtung nach Anspruch 1,
**dadurch gekennzeichnet,**
**dass** das Gegenelement (22) ein Seil, einen Riemen oder eine Kette aufweist, dessen bzw. deren Enden (24, 28) fest mit dem Fahrzeugchassis verbunden sind.

3. Vorrichtung nach Anspruch 1 oder 2,
**dadurch gekennzeichnet,**
**dass** die Enden (24, 28) des Gegenelements (22) jeweils im Bereich der Führungen (16, 18) an dem Fahrzeugchassis befestigt sind.

4. Vorrichtung nach einem der vorherigen Ansprüche,
**dadurch gekennzeichnet,**
**dass** das Antriebsaggregat (20) ein Umlenkelement für das Gegenelement (22) bildet, wobei im Bereich des Antriebsaggregats (20) insbesondere ein erster Gegenelementabschnitt (36) sich zumindest annähernd horizontal in Richtung der ersten Führung (16) erstreckt und ein zweiter Gegenelementabschnitt (38) sich schräg dazu in Richtung der zweiten Führung (18) erstreckt.

5. Vorrichtung nach einem der vorherigen Ansprüche,
**dadurch gekennzeichnet,**
**dass** eine hintere und eine vordere Umlenkeinrichtung (34, 42), insbesondere Umlenkrolle, zum Umlenken des Gegenelements (22) an der Schiebetür (10) im Bereich von in die Führungen (16, 18) eingreifenden Lagermitteln (46, 48) der Schiebetür (10) vorgesehen sind.

6. Vorrichtung nach einem der vorherigen Ansprüche,
**dadurch gekennzeichnet,**
**dass** durch einen hinteren Befestigungspunkt (24) des Gegenelements (22) an dem Chassis und die hintere Umlenkeinrichtung (34) ein hinterer Endabschnitt (32) des Gegenelements (22) und durch einen vorderen Befestigungspunkt (28) des Gegenelements (22) an dem Chassis und die vordere Umlenkeinrichtung (42) ein vorderer Endabschnitt (44) des Gegenelements (22) gebildet ist, wobei durch Betätigung des Antriebsaggregats (20) der hintere Endschnitt (32) verkürzbar bzw. verlängerbar und der vordere Endabschnitt (44) entsprechend verlängerbar bzw. verkürzbar ist.

7. Vorrichtung nach einem der vorherigen Ansprüche,
**dadurch gekennzeichnet,**
**dass** die erste Führung (16) in einem Bereich mittlerer Höhe des Fahrzeugs und - in Fahrtrichtung gesehen - parallel versetzt hinter der zweiten Führung (18) angeordnet ist und dass die zweite Führung (18) unterhalb einer durch die Schiebetür (10) zu verschließenden Türöffnung (14) angeordnet ist.

8. Verfahren zum automatischen Betätigen einer in wenigstens zwei schienenartigen Führungen (16, 18) an einem Chassis eines Kraftfahrzeugs geführten Schiebetür (10), bei dem die Schiebetür (10) durch ein in der Schiebetür (10) vorgesehenes Antriebsaggregat (20) relativ zum Chassis entlang der Führungen (16, 18) bewegt wird, wobei sich das Antriebsaggregat (20) zum Bewegen der Schiebetür (10) an einem fest an dem Chassis verankerten flexiblen Gegenelement (22) entlang voranbewegt,
**dadurch gekennzeichnet,**
**dass** bei einer Bewegung der Schiebetür in Fahrtrichtung ein - in Fahrtrichtung gesehen - vorderer Endabschnitt (44) des Gegenelements (22) verlängert und ein hinterer Endabschnitt (32) des Gegenelements (22) verkürzt wird.

9. Verfahren nach Anspruch 8,
**dadurch gekennzeichnet,**
**dass** das Gegenelement (22) durch das Antriebsaggregat (20) und durch eine an der Schiebetür (10) vorgesehene - in Fahrtrichtung gesehen - hintere und vordere Umlenkeinrichtung (34, 42) umgelenkt wird.

## Claims

1. Device for the automatic actuation of a sliding door (10) of a motor vehicle, which is guided in at least two rail-like guides (16, 18) on a chassis of the motor vehicle, wherein in the sliding door (10) is provided a drive unit (20) for moving the sliding door (10) relative to the chassis along the guides (16, 18), and wherein, to move the sliding door (10), the drive unit (20) cooperates with a counter-element (22) permanently anchored to the chassis and having a flexible design at least in one region, **characterised in that** a first end (24) of the counter-element (22) is fastened in the region of a front end (26) of the first guide (16), seen in the direction of travel, and a second end (28) of the counter-element (22) is fastened in the region of a rear end (30) of the second guide (18).

2. Device according to claim 1, **characterised in that** the counter-element (22) has a cable, a belt or a chain whose ends (24, 28) are rigidly connected to the vehicle chassis.

3. Device according to claim 1 or 2, **characterised in that** the ends (24, 28) of the counter-element (22) are fastened to the vehicle chassis respectively in the region of the guides (16, 18).

4. Device according to any of the preceding claims, **characterised in that** the drive unit (20) forms a deflecting element for the counter-element (22), wherein in the region of the drive unit (20) in particular a first counter-element section (36) extends at least approximately horizontally in the direction of the first guide (16), and a second counter-element section (38) extends obliquely thereto in the direction of the second guide (18).

5. Device according to any of the preceding claims, **characterised in that** a front and a rear deflecting device (34, 42), in particular deflecting roller, are provided on the sliding door (10) in the region of bearing means (46, 48) of the sliding door (10) which engage in the guides (16, 18), for deflecting the counter-element (22).

6. Device according to any of the preceding claims, **characterised in that** a rear end section (32) of the counter-element (22) is formed by a rear fastening point (24) of the counter-element (22) on the chassis and the rear deflecting device (34), and a front end section (44) of the counter-element (22) is formed by a front fastening point (28) of the counter-element (22) on the chassis and the front deflecting device (42), wherein by actuation of the drive unit (20) the rear end section (32) can be shortened or lengthened and the front end section (44) can be lengthened or shortened accordingly.

7. Device according to any of the preceding claims, **characterised in that** the first guide (16) is arranged in a region halfway up the vehicle and, offset and parallel, seen in the direction of travel, behind the second guide (18), and **in that** the second guide (18) is arranged below a door opening (14) to be closed by the sliding door (10).

8. Method for the automatic actuation of a sliding door (10) which is guided in at least two rail-like guides (16, 18) on a chassis of a motor vehicle, in which the sliding door (10) is moved relative to the chassis along the guides (16, 18) by a drive unit (20) provided in the sliding door (10), wherein the drive unit (20) moves along past a flexible counter-element (22) which is permanently anchored to a chassis, for moving the sliding door (10), **characterised in that**, during a movement of the sliding door (10) in the direction of travel, a front end section (44) of the counter-element (22), seen in the direction of travel, is lengthened and a rear end section (32) of the counter-element (22) is shortened.

9. Method according to claim 8, **characterised in that** the counter-element (22) is deflected by the drive unit (20) and by a rear and front deflecting device (34, 42), seen in the direction of travel, provided on the sliding door (10).

## Revendications

1. Dispositif pour l'actionnement automatique d'une porte coulissante d'un véhicule automobile, qui est guidée dans au moins deux guides en forme de rails (16,18) sur un châssis du véhicule automobile, dans lequel il est prévu, dans la porte coulissante (10), une unité d'entraînement (20) servant à déplacer la porte coulissante (10) par rapport au châssis le long des guides (16,18), et dans lequel l'unité d'entraînement (20) coopère, pour déplacer la porte coulissante (10), avec un élément antagoniste (22) ancré de façon fixe sur le châssis et agencé de manière à être flexible au moins par endroits,
**caractérisé en ce**
**qu'**une première extrémité (24) de l'élément antagoniste (22) est fixée dans la zone d'une extrémité avant (26) - vu dans la direction de déplacement - du premier guide (16) et une seconde extrémité (28) de l'élément antagoniste (22) est fixée dans la zone d'une extrémité arrière (30) du second guide (18).

2. Dispositif selon la revendication 1, **caractérisé en ce que** l'élément antagoniste (22) comporte un câble, une courroie ou une chaîne, dont la ou les extrémités (24,28) sont reliées de façon fixe au châssis du véhicule.

3. Dispositif selon la revendication 1 ou 2, **caractérisé en ce que** les extrémités (24,28) de l'élément antagoniste (22) sont fixées respectivement dans la zone des guides (16,18) sur le châssis du véhicule.

4. Dispositif selon l'une des revendications précédentes, **caractérisé en ce que** l'unité d'entraînement (20) forme un élément de renvoi pour l'élément antagoniste (22), auquel cas, dans la zone de l'unité d'entraînement (20), en particulier une première section (36) de l'élément antagoniste s'étend au moins approximativement horizontalement en direction du premier guide (16) et une seconde section (38) de l'élément antagoniste s'étend obliquement par rapport à la précédente en direction du second guide (18).

5. Dispositif selon l'une des revendications précédentes, **caractérisé en ce qu'**un dispositif de renvoi arrière et un dispositif de renvoi avant (34,42), notamment des rouleaux de renvoi, sont prévus pour le renvoi de l'élément antagoniste (22) sur la porte coulissante (10) dans la zone de moyens formant paliers (46,48) de la porte coulissante (10), qui s'engagent dans les guides (16,18).

6. Dispositif selon l'une des revendications précédentes, **caractérisé en ce qu'**une section d'extrémité arrière (32) de l'élément antagoniste (22) est formée par un point arrière de fixation (24) de l'élément antagoniste (22) sur le châssis et sur le dispositif arrière de renvoi (34), et qu'une section d'extrémité avant (44) de l'élément antagoniste (22) est formée par un point de fixation avant (28) de l'élément antagoniste (22) sur le châssis, et le dispositif avant de renvoi (42), auquel cas sous l'effet de l'actionnement de l'unité d'entraînement (20), la section d'extrémité arrière (32) peut être raccourcie ou allongée et la section d'extrémité avant (44) peut être allongée ou raccourcie de façon correspondante.

7. Dispositif selon l'une des revendications précédentes, **caractérisé en ce que** le premier guide (16) est disposé dans une zone de hauteur moyenne du véhicule et - vu dans la direction de déplacement - est disposé parallèlement, d'une manière décalée en arrière du second guide (18), et que le second guide (18) est disposé au-dessous d'une ouverture de porte (14) devant être fermée par la porte coulissante (10).

8. Procédé d'actionnement automatique d'une porte coulissante (10) guidée dans au moins deux guides en forme de rails (16,18) sur un châssis d'un véhicule automobile, selon lequel la porte coulissante (10) est déplacée par une unité d'entraînement (20) prévue dans la porte coulissante (10), par rapport au châssis le long des guides (16, 18), auquel cas l'unité d'entraînement (20) servant à déplacer la porte coulissante (10) se déplace le long d'un élément antagoniste flexible (22) ancré de façon fixe sur le châssis,
**caractérisé en ce**
**que** lors d'un déplacement de la porte coulissante dans la direction de déplacement, une section d'extrémité avant (44) - vu dans la direction de déplacement - de l'élément antagoniste (22) est allongée et une section d'extrémité arrière (32) de l'élément antagoniste (22) est raccourcie.

9. Procédé selon la revendication 8, **caractérisé en ce que** l'élément antagoniste (22) est dévié par l'unité d'entraînement (20) et par des dispositifs de renvoi avant et arrière (34,42) - vu dans la direction de déplacement-, prévus sur la porte coulissante (10).
